# EUROPEAN PATENT APPLICATION

(11) **EP 4 822 730 A1**
(43) Date of publication of application: **14.10.2026**
(21) Application number: 24909865.8
(22) Date of filing: 19.08.2024
(51) Int. Cl.: H01H 71/02, H01H 73/18, H02B 1/04

(54) **CIRCUIT BREAKER AND POWER DEVICE**

(30) Priority: 29.12.2023 CN 202311867693
(71) Applicant: Huawei Digital Power Technologies Co., Ltd., Shenzhen, Guangdong 518043 (CN)
(72) Inventor: GUI, Xin, Shenzhen, Guangdong 518043 (CN); SUN, Jisheng, Shenzhen, Guangdong 518043 (CN); LIAO, Chuancan, Shenzhen, Guangdong 518043 (CN); ZHANG, Xiufeng, Shenzhen, Guangdong 518043 (CN); ZHAO, Fugao, Shenzhen, Guangdong 518043 (CN); XIA, Quanfei, Shenzhen, Guangdong 518043 (CN)
(74) Representative: Isarpatent
(86) International application number: PCT/CN2024/113081
(87) International publication number: WO 2025/138915

(57) **Abstract**

This application provides a circuit breaker and an electric power device. The circuit breaker includes an outer shell, an operating handle, an operating mechanism, a current-carrying component, and an arc-quenching chamber. The operating handle, the operating mechanism, the current-carrying component, and the arc-quenching chamber are sequentially disposed in a depth direction of the circuit breaker. The current-carrying component includes a moving contact component and a fixed contact. The operating mechanism is connected to the moving contact component. The operating handle is configured to control the operating mechanism to drive the moving contact component to move, for a moving contact and the fixed contact to be in contact or be separated. The arc-quenching chamber is configured to extinguish an electric arc generated when the moving contact and the fixed contact are separated. The moving contact component includes a gas-generating link rod and the moving contact that are relatively fixed. The gas-generating link rod is provided with a baffle plate configured to cover an opening between the operating mechanism and the arc-quenching chamber. In a process in which the moving contact and the fixed contact are separated, the baffle plate can always isolate the operating mechanism from the arc-quenching chamber, thereby avoiding energization of the operating mechanism due to an electric arc, generated when the moving contact and the fixed contact are separated, jetting to the operating mechanism, further improving safety of the circuit breaker.

## Description

### CROSS-REFERENCE TO RELATED APPLICATIONS

This application claims priority to Chinese Patent Application No. 202311867693.X, filed with the China National Intellectual Property Administration on December 29, 2023 and entitled "CIRCUIT BREAKER AND ELECTRIC POWER DEVICE", which is incorporated herein by reference in its entirety.

### TECHNICAL FIELD

This application relates to the field of communication device technologies, and in particular, to a circuit breaker and an electric power device.

### BACKGROUND

As technologies such as artificial intelligence (artificial intelligence, AI), 5.5G, and autonomous driving are gradually applied in people's daily life and work, requirements of these technologies for computing power increase significantly. A data center, as a critical area supported by computing power, requires ultra-high capacity and high density. As an indispensable core unit in a modern data center, an uninterruptible power supply (uninterruptible power supply, UPS) is further miniaturized to keep pace with the trend of upgraded capacity and high density.

A power supply and distribution system in the data center usually requires a circuit breaker for electric energy distribution. As a key component in the power supply and distribution system, the circuit breaker can control a circuit to be connected or disconnected, and further has a specific protection function. Specifically, a mechanical switch may be provided in the circuit breaker, and an operator may operate the mechanical switch to switch the circuit breaker between an closed state and an open state, making the circuit connected or disconnected. In addition, when a fault such as overload or a short circuit occurs in the circuit, the circuit breaker can automatically switch to the open state to interrupt a current in the circuit, implementing the protection function.

For the data center, a further decrease in a volume and power consumption of a power conversion module leads to an increase in a current level. However, limited internal space of an existing cabinet imposes significant constraints on layouts and a quantity of circuit breakers, making it challenging to meet a higher requirement for a running current.

### SUMMARY

This application provides a circuit breaker and an electric power device. An overall size of the circuit breaker is adjusted to change space occupied by the circuit breaker in a cabinet, thereby increasing a quantity of circuit breakers that can be laid out in the cabinet, and improving safety of the circuit breaker.

According to a first aspect, this application provides an electric power device. The electric power device includes a cabinet, a plurality of circuit breakers, and a plurality of power modules. The plurality of power modules are disposed in the cabinet, and the plurality of circuit breakers are disposed sequentially in the cabinet in a width direction of the cabinet, where a height direction of the circuit breaker is the same as the width direction of the cabinet, a width direction of the circuit breaker is the same as a height direction of the cabinet, and a depth direction of the circuit breaker is the same as a depth direction of the cabinet. Specifically, the circuit breaker includes an outer shell, an operating handle, an operating mechanism, a current-carrying component, and an arc-quenching chamber. The operating handle is connected to the operating mechanism. The current-carrying component includes a moving contact component and a fixed contact. A part that is of the operating handle and that is at least close to the operating mechanism, the operating mechanism, the moving contact component, and the arc-quenching chamber are disposed sequentially in the outer shell in the depth direction of the circuit breaker. A separator plate is disposed in the outer shell, the separator plate is located between the operating mechanism and the arc-quenching chamber, and extends in the height direction of the circuit breaker, the separator plate is configured to separate the operating mechanism from the arc-quenching chamber, and the separator plate is provided with an opening. The moving contact component is rotatable relative to the outer shell. The moving contact component specifically includes a moving contact and a gas-generating link rod, where the moving contact and the gas-generating link rod are relatively fixed. The gas-generating link rod is configured to form a gas blast toward the arc-quenching chamber. An end that is of the gas-generating link rod and that is close to the operating mechanism is rotatably connected to the outer shell, an end that is of the gas-generating link rod and that is away from the operating mechanism is provided with a baffle plate, and the baffle plate is located on a side that is of the opening and that is close to the operating mechanism. The fixed contact is located, in the depth direction of the circuit breaker, on a side that is of the moving contact component and that is away from the operating mechanism. The operating mechanism is connected to the moving contact component, and the operating handle is configured to control the operating mechanism to drive the gas-generating link rod of the moving contact component to rotate relative to the outer shell, for the moving contact and the fixed contact to be in contact or be separated. The baffle plate is configured to always cover the opening in a process in which the operating mechanism drives the gas-generating link rod to rotate relative to the outer shell. The arc-quenching chamber is configured to extinguish an electric arc generated when the moving contact and the fixed contact are separated.

The circuit breaker has a circuit breaker operating surface for an operator to perform operations such as a closing operation and an opening operation, and checking operating status of the circuit breaker. In a plane on which the circuit breaker operating surface is located, a dimension of the circuit breaker in a direction of pushing the operating handle is a height, and a dimension of the circuit breaker perpendicular to the height direction is a width. A dimension of the circuit breaker in a direction perpendicular to the circuit breaker operating surface is a depth. The circuit breaker in this application may be used in a power supply and distribution system, and the circuit breaker may be specifically mounted in a cabinet. Similarly, the cabinet has a user operating surface for an operator to perform operations such as a control operation, mounting and removing, or maintenance. The circuit breaker operating surface of the circuit breaker faces a same direction as the user operating surface. A state in which the cabinet is placed on the ground is used as an example. In a plane on which the user operating surface is located, a dimension that is of the cabinet and that is parallel to the ground is a width, and a dimension that is of the cabinet and that is perpendicular to the ground is a height. A dimension that is of the cabinet and that is perpendicular to the user operating surface is a depth. When the plurality of circuit breakers are mounted in the cabinet, these circuit breakers are placed in parallel in the width direction of the cabinet, where the circuit breaker operating surface of the circuit breaker faces the same direction as the user operating surface of the cabinet, the height direction of each circuit breaker is the same as the width direction of the cabinet, the width direction of each circuit breaker is the same as the height direction of the cabinet, and the depth direction of each circuit breaker is the same as the depth direction of the cabinet, that is, each circuit breaker is placed horizontally in the cabinet.

In the electric power device in this application, that the part that is of the operating handle and that is close to the operating mechanism, the operating mechanism, the moving contact, the arc-quenching chamber, and an arc-extinguishing module of the circuit breaker are disposed in the depth direction of the circuit breaker may be understood as that the part of the operating handle, the operation mechanism, the moving contact component, the arc-quenching chamber, and the arc-extinguishing module are disposed in the depth direction of the circuit breaker in a layered form. In this way, component layouts of the circuit breaker in the height direction can be reduced, reducing the height of the circuit breaker, thereby reducing space occupied by the circuit breaker, and increasing a quantity of circuit breakers that can be laid out in the cabinet. The circuit breaker includes a first layer (an electric operation layer or a manual operation layer), a second layer (an operation layer), a third layer (a current-carrying layer), a fourth layer (an arc-quenching layer), and a fifth layer (an arc-extinguishing layer). During specific configuration of the circuit breaker, the operating handle is located on the first layer, the operating mechanism is located on the second layer, the current-carrying component is located on the third layer, the arc-quenching chamber is located on the fourth layer, and the arc-extinguishing module is located on the fifth layer. The moving contact of the moving contact component may extend in the depth direction of the circuit breaker, so that a dimension of the moving contact component in the height direction of the circuit breaker is reduced. This can further help minimize the circuit breaker in the height direction. In addition, when dimension miniaturization of the moving contact component is implemented, a driving force arm for closing the moving contact and the static contact may become larger, thereby reducing a driving force of the operating mechanism, and facilitating operation stability of the operating mechanism. Moreover, the moving contact extends toward the arc-quenching chamber, and the fixed contact is located, in the depth direction of the circuit breaker, on a side that is of the moving contact and that is away from the operating mechanism. Therefore, in a process in which the moving contact and the fixed contact are in contact or are separated, a movement path of the moving contact is in the height direction of the circuit breaker, and does not affect movement of the operating mechanism. This is conducive to implementing electrical separation of the moving contact component.

In addition, in the electric power device in this application, a gas-generating material, eroded by an electric arc, generates a large amount of gas, causing a pressure increase at a position at which the gas-generating material is eroded, so that there is a pressure difference between the position and a surrounding environment, and then a gas flow from the position to a low-pressure environment is formed. The flowing gas flow is referred to as a gas blast. The gas-generating material includes, but is not limited to, a composite material, a ceramic material, or another new material. In the fourth layer (the arc-quenching layer), when the moving contact and the fixed contact are separated, an electric arc is generated between the moving contact and the fixed contact, and the gas-generating link rod made of the gas-generating material generates a large amount of gas under erosion effect of the electric arc, causing a pressure increase around the gas-generating link rod, and leading to a pressure difference from the outside of the circuit breaker. Consequently, a gas blast toward the arc-quenching chamber is formed for the electric arc. Under the effect of the gas blast, the electric arc passes through the arc-quenching chamber, during which a temperature of the electric arc is reduced, so that energy of the electric arc is fully cooled down, and a high arc voltage is generated, to extinguish the electric arc, thereby improving arc-extinguishing safety of the circuit breaker. In addition, in the foregoing process, an arc-shaped baffle plate always covers the opening, thereby isolating the arc-quenching chamber from the operating mechanism, avoiding energization of the operating mechanism due to an electric arc, generated when the moving contact and the fixed contact are separated, jetting to the operating mechanism, and further improving safety of the circuit breaker.

In a possible implementation, the baffle plate is an arc-shaped baffle plate, and a circle center of the arc-shaped baffle plate is located on a side that is of the arc-shaped baffle plate and that is close to the operating mechanism. In this implementation, a shape of the arc-shaped baffle plate can match a moving track of the moving contact, so that the arc-shaped baffle plate can rotate with the moving contact and keep covering the opening.

In a possible implementation, the end that is of the gas-generating link rod and that is away from the operating mechanism passes through the baffle plate and the opening, and extends toward the arc-quenching chamber. In this way, the gas-generating link rod can extend to a position at which the moving contact and the fixed contact are in contact, and directly generate a gas blast toward an electric arc generated between the moving contact and the fixed contact, to quickly extinguish the electric arc.

In a possible implementation, the moving contact component further includes a housing, the operating mechanism is fastened to the housing, and the housing is rotatably connected to the outer shell. The end that is of the gas-generating link rod and that is close to the operating mechanism is located in the housing, and the other end extends out of the housing. The baffle plate is located on a surface of a side that is of the housing and that is close to the arc-quenching chamber. When the operating mechanism drives the housing to rotate relative to the outer shell, the housing pushes the gas-generating link rod to rotate relative to the outer shell, to drive the moving contact to rotate. In this way, the operating mechanism can be controlled by pushing the operating handle to drive the housing to rotate, so that the moving contact can be directly pushed to rotate.

In a possible implementation, a rotation center of the housing relative to the outer shell overlaps a rotation center of the gas-generating link rod relative to the outer shell, so that the housing and the gas-generating link rod can be connected by a same rotating shaft, and the rotating shaft can rotatably connect the housing and the gas-generating link rod to the outer shell, to simplify a structure of the moving contact component.

In a possible implementation, the moving contact includes a rotatable lever and a contact, the rotatable lever and the gas-generating link rod are opposite, and the contact is located at an end that is of the rotatable lever and that is close to the arc-quenching chamber. The moving contact component further includes a spring located in the housing, one end of the spring is fastened to the housing, the other end is fastened to the rotatable lever, and the spring is configured to apply a pulling force to the moving contact when the circuit breaker is closed, to keep the moving contact and the fixed contact in good contact.

In a possible implementation, an end that is of the contact and that is close to the fixed contact is configured to be in contact with or be separated from the fixed contact, an end that is of the contact and that is away from the fixed contact is provided with an arcing contact, and the arcing contact has an arc-guiding height in a direction away from the fixed contact, and is configured to guide, when the moving contact and the fixed contact are separated, the electric arc to concentrate on the arcing contact, thereby facilitating concentrated guidance of the electric arc to move toward the arc-quenching chamber.

In a possible implementation, the moving contact component includes a plurality of moving contacts, and the plurality of moving contacts are disposed sequentially in the width direction of the circuit breaker and are fastened to the gas-generating link rod. In the plurality of moving contacts, an arc-guiding height of an arcing contact of a moving contact is greater than an arc-guiding height of an arcing contact of another moving contact. When an electric arc is generated through separation, the electric arc can concentrate on one of the foregoing moving contacts, reducing electric erosion and electric losses during separation of other contacts, and further reducing losses of other moving contacts.

In a possible implementation, the moving contact and the gas-generating link rod are rotatably connected to the outer shell by a rotating shaft, and the rotating shaft can relatively fix the moving contact and the gas-generating link rod.

In a possible implementation, the current-carrying component further includes a conducting wire, and two copper busbars opposite to each other in the height direction of the circuit breaker, and the two copper busbars extend separately in the depth direction of the circuit breaker. One end of the conducting wire is connected to one of the two copper busbars, the other end is connected to the moving contact, and in the depth direction of the circuit breaker, the conducting wire is located on a side that is of a rotation center of the moving contact relative to the outer shell and that is close to the arc-quenching chamber. The other of the two copper busbars is connected to the fixed contact. In this implementation, the conducting wire is always located on the side that is of the rotation center of the moving contact and that is away from the operating mechanism. Therefore, in the depth direction of the circuit breaker, the conducting wire is always spaced apart from the operating mechanism, to avoid an impact of the energized conducting wire on the operating mechanism.

In a possible implementation, the circuit breaker further includes a tripping control component, and the tripping control component can implement free tripping, opening, and closing of the circuit breaker. Specifically, in the height direction of the circuit breaker, the tripping control component and the conducting wire are disposed on a same side of the moving contact component, or the tripping control component and the conducting wire are respectively disposed on two sides of the moving contact component. The tripping control component and the operating mechanism are in a transmission connection. The tripping control component is configured to control, when a fault current is detected, the operating mechanism to drive the moving contact component to move, for the moving contact and the fixed contact to be separated.

In a possible implementation, the electric power device further includes an arc-extinguishing module, the arc-extinguishing module is located, in the depth direction of the circuit breaker, on a side that is of the arc-quenching chamber and that is away from the operating mechanism, and the arc-extinguishing module is configured to purify a gas jetting from the arc-quenching chamber. The electric power device further includes a circuit board located in the cabinet, the circuit board and the plurality of circuit breakers are disposed sequentially in the depth direction of the cabinet, and the circuit board is disposed close to the arc-extinguishing module. The arc-extinguishing module can adsorb electrical free ions jetting from the arc-extinguishing module, so that the circuit breaker can implement completely zero arc jetting through a gas blown from the arc-extinguishing module, avoiding an adverse impact on the circuit board of the electric power device.

In a possible implementation, an arc-jetting vent is provided between the arc-extinguishing module and the arc-quenching chamber, the arc-jetting vent communicates the arc-quenching chamber and the arc-extinguishing module, and the arc-jetting vent is provided close to a side that is of the arc-quenching chamber and that is away from the fixed contact in the height direction of the circuit breaker. The gas-generating link rod is configured to form a gas blast toward the arc-jetting vent. Under the effect of the gas blast, the electric arc passes through the arc-quenching chamber, during which a temperature of the electric arc is reduced, so that energy of the electric arc is fully cooled down, and a high arc voltage is generated, thereby improving arc-extinguishing safety of the circuit breaker.

According to a second aspect, this application provides a circuit breaker. The circuit breaker includes an outer shell, an operating handle, an operating mechanism, a current-carrying component, and an arc-quenching chamber. The operating handle is connected to the operating mechanism. The current-carrying component includes a moving contact component and a fixed contact. A part that is of the operating handle and that is at least close to the operating mechanism, the operating mechanism, the moving contact component, and the arc-quenching chamber are disposed sequentially in the outer shell in the depth direction of the circuit breaker. A separator plate is disposed in the outer shell, the separator plate is located between the operating mechanism and the arc-quenching chamber, and extends in a height direction of the circuit breaker, the separator plate is configured to separate the operating mechanism from the arc-quenching chamber, and the separator plate is provided with an opening. The moving contact component is rotatable relative to the outer shell. The moving contact component specifically includes a moving contact and a gas-generating link rod, where the moving contact and the gas-generating link rod are relatively fixed. The gas-generating link rod is configured to form a gas blast toward the arc-quenching chamber. An end that is of the gas-generating link rod and that is close to the operating mechanism is rotatably connected to the outer shell, an end that is of the gas-generating link rod and that is away from the operating mechanism is provided with a baffle plate, and the baffle plate is located on a side that is of the opening and that is close to the operating mechanism. The fixed contact is located, in the depth direction of the circuit breaker, on a side that is of the moving contact component and that is away from the operating mechanism. The operating mechanism is connected to the moving contact component, and the operating handle is configured to control the operating mechanism to drive the gas-generating link rod of the moving contact component to rotate relative to the outer shell, for the moving contact and the fixed contact to be in contact or be separated. The baffle plate is configured to always cover the opening in a process in which the operating mechanism drives the gas-generating link rod to rotate relative to the outer shell. The arc-quenching chamber is configured to extinguish an electric arc generated when the moving contact and the fixed contact are separated.

In the circuit breaker in this application, that the part that is of the operating handle and that is close to the operating mechanism, the operating mechanism, the moving contact, the arc-quenching chamber, and an arc-extinguishing module are disposed in the depth direction of the circuit breaker may be understood as that the part of the operating handle, the operation mechanism, the moving contact component, the arc-quenching chamber, and the arc-extinguishing module are disposed in the depth direction of the circuit breaker in a layered form. In this way, component layouts of the circuit breaker in the height direction can be reduced, reducing the height of the circuit breaker, thereby reducing space occupied by the circuit breaker, and increasing a quantity of circuit breakers that can be laid out in the cabinet. The circuit breaker includes a first layer (an electric operation layer or a manual operation layer), a second layer (an operation layer), a third layer (a current-carrying layer), a fourth layer (an arc-quenching layer), and a fifth layer (an arc-extinguishing layer). During specific configuration of the circuit breaker, the operating handle is located on the first layer, the operating mechanism is located on the second layer, the current-carrying component is located on the third layer, the arc-quenching chamber is located on the fourth layer, and the arc-extinguishing module is located on the fifth layer. The moving contact of the moving contact component may extend in the depth direction of the circuit breaker, so that a dimension of the moving contact component in the height direction of the circuit breaker is reduced. This can further help minimize the circuit breaker in the height direction. In addition, when dimension miniaturization of the moving contact component is implemented, a driving force arm for closing the moving contact and the static contact may become larger, thereby reducing a driving force of the operating mechanism, and facilitating operation stability of the operating mechanism. Moreover, the moving contact extends toward the arc-quenching chamber, and the fixed contact is located, in the depth direction of the circuit breaker, on a side that is of the moving contact and that is away from the operating mechanism. Therefore, in a process in which the moving contact and the fixed contact are in contact or are separated, a movement path of the moving contact is in the height direction of the circuit breaker, and does not affect movement of the operating mechanism. This is conducive to implementing electrical separation of the moving contact component. In addition, in the fourth layer (the arc-quenching layer), when the moving contact and the fixed contact are separated, an electric arc is generated between the moving contact and the fixed contact, and the gas-generating link rod made of the gas-generating material generates a large amount of gas under erosion effect of the electric arc, causing a pressure increase around the gas-generating link rod, and leading to a pressure difference from the outside of the circuit breaker. As a result, a gas blast toward the arc-quenching chamber is formed for the electric arc. Under the effect of the gas blast, the electric arc passes through the arc-quenching chamber, during which a temperature of the electric arc is reduced, so that energy of the electric arc is fully cooled down, and a high arc voltage is generated, to extinguish the electric arc, thereby improving arc-extinguishing safety of the circuit breaker. In addition, in the foregoing process, an arc-shaped baffle plate always covers the opening, thereby isolating the arc-quenching chamber from the operating mechanism, avoiding energization of the operating mechanism due to an electric arc, generated when the moving contact and the fixed contact are separated, jetting to the operating mechanism, and further improving safety of the circuit breaker.

### BRIEF DESCRIPTION OF DRAWINGS

FIG. 1 is a diagram of an application scenario of a circuit breaker according to an embodiment of this application;
FIG. 2 is a diagram of an electric power device according to an embodiment of this application;
FIG. 3 is a diagram of a circuit breaker according to an embodiment of this application;
FIG. 4 is another diagram of a circuit breaker according to an embodiment of this application;
FIG. 5 is another diagram of a circuit breaker according to an embodiment of this application;
FIG. 6 is a diagram of a moving contact component according to an embodiment of this application;
FIG. 7 is another diagram of a moving contact component according to an embodiment of this application;
FIG. 8 is a diagram of cooperation between a moving contact and a gas-generating link rod according to an embodiment of this application;
FIG. 9 is a cross-sectional view of the moving contact component in FIG. 7;
FIG. 10 is a diagram of a gas-generating link rod according to an embodiment of this application;
FIG. 11 is a diagram of a moving contact according to an embodiment of this application;
FIG. 12 is another diagram of a circuit breaker according to an embodiment of this application;
FIG. 13 is a diagram of a fixed contact component according to an embodiment of this application;
FIG. 14 is another diagram of a fixed contact component according to an embodiment of this application;
FIG. 15 is another diagram of a fixed contact component according to an embodiment of this application;
FIG. 16 is a diagram of a part of a circuit breaker according to an embodiment of this application;
FIG. 17 is a diagram of another part of a circuit breaker according to an embodiment of this application; and
FIG. 18 is a diagram of another part of a circuit breaker according to an embodiment of this application.

Reference numerals:

| | | | | | |
|---|---|---|---|---|---|
| 01: | power supply and distribution system | 02: | power supply module | 10: | electric power device |
| 11: | cabinet | 20: | circuit breaker | 21: | outer shell |
| 22: | operating handle | 23: | operating mechanism | 24: | current-carrying component |
| 25: | arc-quenching chamber | 26: | arc-extinguishing module | 27: | tripping control component |
| 28: | arc-spraying vent | 110: | user operating surface | 210: | circuit breaker operating surface |
| 212: | separator plate | 241: | moving contact component | 242: | fixed contact component |
| 243: | conducting wire | 244: | first copper busbar | 245: | second copper busbar |
| 246: | first connector | 247: | second connector | 257: | arc-guiding plate |
| 2411: | gas-generating link rod | 2412: | moving contact | 2413: | housing |
| 2414: | spring | 2421: | fixed contact | 2422: | first gas-generating plate |
| 2423: | second gas-generating plate | 2571: | gas-generating hole | 24111: | baffle plate |
| 24112: | moving contact mounting groove | 24113: | protrusion | 24121: | rotatable lever |
| 24122: | contact | 24123: | arcing contact | 24124: | hook |
| 24125: | notch | | | | |

### DESCRIPTION OF EMBODIMENTS

To make the objectives, technical solutions, and advantages of this application clearer, the following further describes this application in detail with reference to the accompanying drawings.

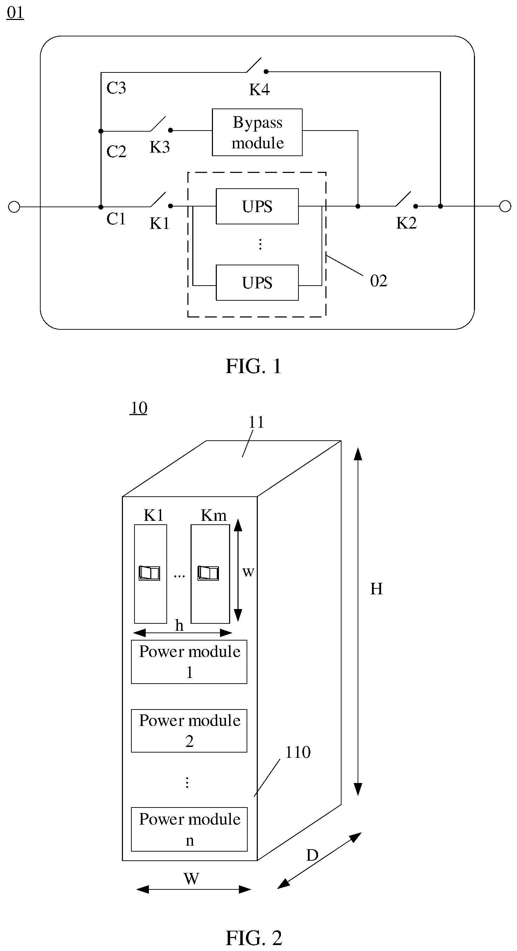

For ease of understanding a circuit breaker and an electric power device provided in embodiments of this application, the following describes an application scenario of the circuit breaker and the electric power device. The circuit breaker and the electric power device provided in embodiments of this application may be widely used in various power supply and distribution systems. FIG. 1 is a diagram of an application scenario of a circuit breaker according to an embodiment of this application. As shown in FIG. 1, in an example provided in this application, the circuit breaker may be used in a power supply and distribution system 01 of a data center, and is configured to make, carry, and interrupt a current between a power grid and the data center. The power supply and distribution system 01 may include a power supply module 02 (the power supply module 02 formed by connecting a plurality of UPSs in series and parallel, as shown in FIG. 1) and a plurality of circuit breakers. For example, three circuits are provided in the power supply and distribution system 01, respectively a first circuit C1, a second circuit C2, and a third circuit C3. Each circuit is provided correspondingly with a circuit breaker. The power supply module 02 is connected in the first circuit C1, a first circuit breaker K1 is disposed at an input end of the power supply module 02, and a second circuit breaker K2 is disposed at an output end of the power supply module 02. A bypass module is connected in the second circuit C2, a third circuit breaker K3 is disposed at one end of the bypass module, and the other end of the bypass module is connected to the second circuit breaker K2. The third circuit C3 is a standby circuit and is provided with a fourth circuit breaker K4.

When the circuit between the power grid (or a power supply) and the data center needs to be connected, the first circuit breaker K1 and the second circuit breaker K2 may be switched to a closed state. When the circuit between the power grid and the data center needs to be disconnected, the first circuit breaker K1 or the second circuit breaker K2 may be switched to an open state. In this way, a power-on state and a power-off state of the data center are controlled by controlling the closed state and the open state of the circuit breaker. When a power-consuming device of the data center needs to be overhauled and maintained, the first circuit breaker K1 and the second circuit breaker K2 may be switched to the open state, and the third circuit breaker K3 or the fourth circuit breaker K4 may be switched to the closed state, to facilitate operations such as overhauling and maintenance on the power-consuming device.

In addition, the circuit breaker in this application may also be used in a power supply and distribution system 01 of an enterprise power-consuming device or a public power-consuming device, and is configured to make, carry, and interrupt a current between a power grid and the enterprise power-consuming device or the public power-consuming device. For example, when a power-consuming device (such as a 4G base station or a 5G base station) needs to operate normally, an operator may switch a circuit breaker to a closed state, so that a power grid can supply electric energy required for normal operation to the power-consuming device. When the power-consuming device needs to be overhauled and maintained, the operator may switch the circuit breaker to an open state, to facilitate operations such as overhauling and maintenance on the power-consuming device.

The power supply system may specifically include a plurality of electric power devices 10. FIG. 2 is a diagram of an electric power device according to an embodiment of this application. As shown in FIG. 2, each electric power device 10 includes a cabinet 11, and a plurality of power modules and a plurality of circuit breakers (K1, ..., and Km) that are located in the cabinet 11. A side that is of the cabinet 11 and that faces an operator is a user operating surface 110. In this application, a state in which the cabinet 11 is placed on the ground is used as an example. A dimension that is of the user operating surface 110 and that is parallel to the ground is a width, a dimension that is of the user operating surface 110 and that is perpendicular to the ground is a height, and a dimension perpendicular to the user operating surface 110 is a depth. The plurality of power modules are stacked sequentially in a height H direction of the cabinet 11, and the plurality of circuit breakers are placed sequentially on a side of the plurality of power modules in a width W direction of the cabinet 11. The power module is configured to perform power conversion on a voltage from a power grid, to output an adaptive voltage to a load device. Specifically, the power module may be an AC/AC module, or may be an AC/DC module.

In an existing electric power device, due to a limited width and a limited height of a cabinet, a quantity of circuit breakers on the user operating surface 110 is limited, failing to meet large-capacity and high-density layout requirements of a power supply and distribution system.

Therefore, this application provides a circuit breaker and an electric power device. An overall size of the circuit breaker is adjusted to change space occupied by the circuit breaker in a cabinet, thereby increasing a quantity of circuit breakers that can be laid out in the cabinet, and improving safety of the circuit breaker.

It should be noted that terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

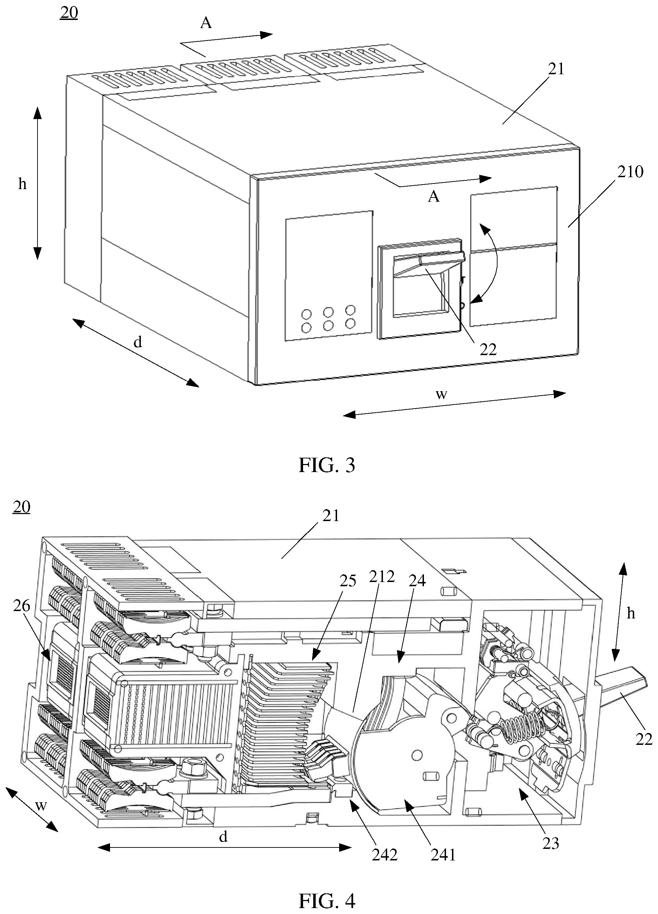

FIG. 3 is a diagram of a circuit breaker according to an embodiment of this application. FIG. 4 is another diagram of a circuit breaker according to an embodiment of this application. FIG. 4 is a cross-sectional view of the circuit breaker in FIG. 3 in a direction of A-A. As shown in FIG. 3 and FIG. 4, an circuit breaker 20 includes an outer shell 21, an operating handle 22, an operating mechanism 23, a current-carrying component 24, and an arc-quenching chamber 25. Specifically, the operating handle 22 is connected to the operating mechanism 23. The current-carrying component 24 includes a moving contact component 241 and a fixed contact 2421. In an embodiment, an end that is of the operating handle 22 and that is away from the operating mechanism 23 may extend out of the outer shell 21, for an operator to push the operating handle 22 to perform a closing operation and an opening operation. In another embodiment, the outer shell 21 is provided with a rotary knob, to implement opening and closing of the circuit breaker 20 through a manual operation on the rotary knob. Specifically, the end that is of the operating handle 22 and that is away from the operating mechanism 23 is connected to the rotary knob. When the operator performs the manual operation on the rotary knob, the rotary knob rotates and drives the operating handle 22 to be pushed in a height h direction. In another embodiment, the circuit breaker 20 may further include a remote controller and an electric operating apparatus. The electric operating apparatus is connected to the operating handle 22 and is connected to the remote controller, to implement opening and closing of the circuit breaker 20 through an electric operation. When the operator performs the electric operation, a closing instruction or an opening instruction is sent to the remote controller, and the remote controller can control the electric operating apparatus to push the operating handle 22. In this embodiment, the operator may send an instruction near the circuit breaker 20, or may send an instruction remotely through a communication apparatus. In addition, a part that is of the operating handle 22 and that is at least close to the operating mechanism 23, the operating mechanism 23, the moving contact component 241, and the arc-quenching chamber 25 are disposed sequentially in the outer shell 21 in a depth d direction of the circuit breaker 20. In the depth d direction of the circuit breaker 20, the fixed contact 2421 is located on a side that is of the moving contact component 241 and that is away from the operating mechanism 23. In other words, in the depth d direction of the circuit breaker 20, the operating mechanism 23 is located on a side of the operating handle 22, and the operating mechanism 23 and the operating handle 22 are in a transmission connection. The current-carrying component 24 is located on a side that is of the operating mechanism 23 and that is away from the operating handle 22. The moving contact component 241 includes a gas-generating link rod 2411 and a moving contact 2412, the gas-generating link rod 2411 is rotatably connected to the outer shell 21, and the moving contact 2412 and the gas-generating link rod 2411 are relatively fixed. The operating mechanism 23 is connected to the moving contact component 241, and the operating handle 22 is configured to control the operating mechanism 23 to drive the moving contact 2412 to move, for the moving contact 2412 and the fixed contact 2421 to be in contact or be separated. The arc-quenching chamber 25 is configured to extinguish an electric arc generated when the moving contact 2412 and the fixed contact 2421 are separated. The fixed contact 2421 is located on a side of the arc-quenching chamber 25 in the height h direction of the circuit breaker 20. A moving track of the moving contact 2412 extends in the height direction of the circuit breaker 20 from the fixed contact 2421 to the other side of the arc-quenching chamber 25.

In this application, a side that is of the operating handle 22 and that extends out of the outer shell 21 is a circuit breaker operating surface 210. The circuit breaker operating surface 210 is used as an example. A dimension of the circuit breaker 20 in a direction of pushing the operating handle 22 is a height, a dimension that is of the circuit breaker 20 and that is perpendicular to the height h direction is a width w, and a dimension that is of the circuit breaker 20 and that is perpendicular to the circuit breaker operating surface 210 is a depth d. A first direction is the depth d direction of the circuit breaker 20. In other words, the operating handle 22, the operating mechanism 23, the current-carrying component 24, and the arc-quenching chamber 25 are disposed sequentially in the depth d direction of the circuit breaker 20. When the circuit breaker 20 is placed in the cabinet 11, the height h direction of the circuit breaker 20 is the same as the width W direction of the cabinet 11, the width w direction of the circuit breaker 20 is the same as the height H direction of the cabinet 11, and the depth d direction of the circuit breaker 20 is the same as a depth D direction of the cabinet 11. In this case, when an operator performs a closing operation or an opening operation on the circuit breaker 20, the operator pushes the operating handle 22 in the width W direction of the cabinet 11. When the operating handle 22 is pushed to perform the opening operation or the closing operation, the operating mechanism 23 may move with with the operating handle 22, to drive the moving contact 2412 to be separated from or be in contact with the fixed contact 2421. When the moving contact 2412 and the fixed contact 2421 are in contact, the circuit breaker 20 is in a closed state. When the moving contact 2412 and the fixed contact 2421 are separated, the circuit breaker 20 is in an open state. In the circuit breaker 20 in this application, the part that is of the operating handle 22 and that is at least close to the operating mechanism 23, the operating mechanism 23, the moving contact component 241, and the arc-quenching chamber 25 that are disposed in the depth d direction of the circuit breaker 20 are considered to be disposed in a layered form, so that the height h of the circuit breaker 20 can be reduced, and space occupied by the circuit breaker 20 can be reduced, thereby increasing a quantity of circuit breakers 20 that can be laid out in the cabinet 11. Specifically, the operating handle 22 is located on a first layer (an electric operation layer or a manual operation layer), the operating mechanism 23 is located on a second layer (an operation layer), a part of the current-carrying component 24 is located on a third layer (a current-carrying layer), and the arc-quenching chamber 25 is located on a fourth layer (an arc-quenching layer). In the fourth layer (the arc-quenching layer), when the moving contact 2412 and the fixed contact 2421 are separated, an electric arc is generated between the moving contact 2412 and the fixed contact 2421, and the gas-generating link rod 2411 generates a large amount of gas under erosion effect of the electric arc, causing a pressure increase around the gas-generating link rod 2411, and leading to a pressure difference from the outside of the circuit breaker 20. As a result, a gas blast toward the arc-quenching chamber 25 is formed. Under the effect of the gas blast, the electric arc passes through the arc-quenching chamber 25, during which a temperature of the electric arc is reduced, so that energy of the electric arc is fully cooled down, and a high arc voltage is generated, to extinguish the electric arc, thereby improving arc-extinguishing safety of the circuit breaker 20. In addition,the moving contact 2412 of the moving contact component 241 may extend in the depth d direction of the circuit breaker 20, so that a dimension of the moving contact component 241 in the height h direction of the circuit breaker 20 is reduced. This can further help minimize the circuit breaker 20 in the height h direction.

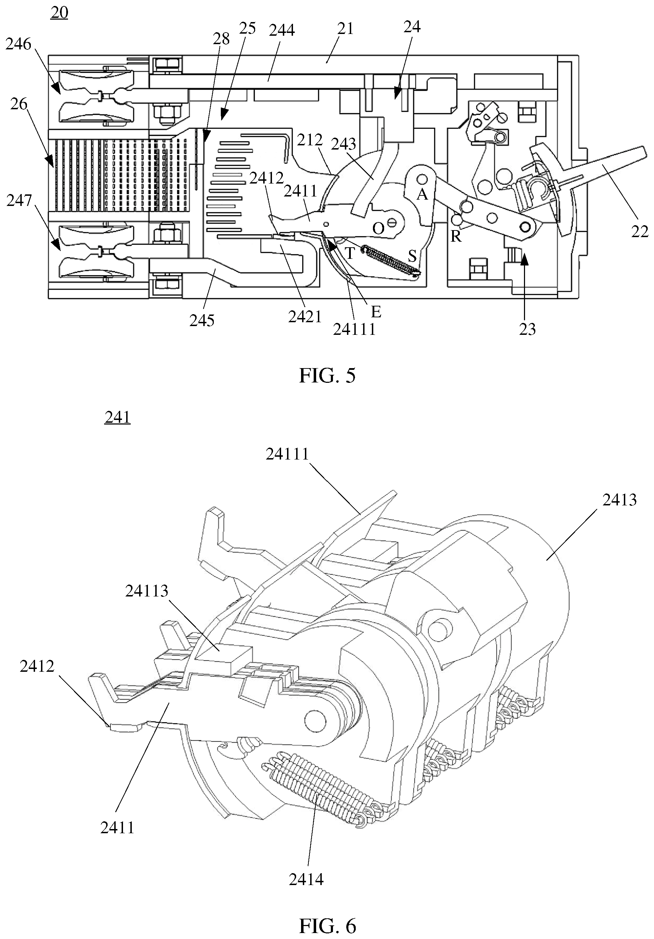

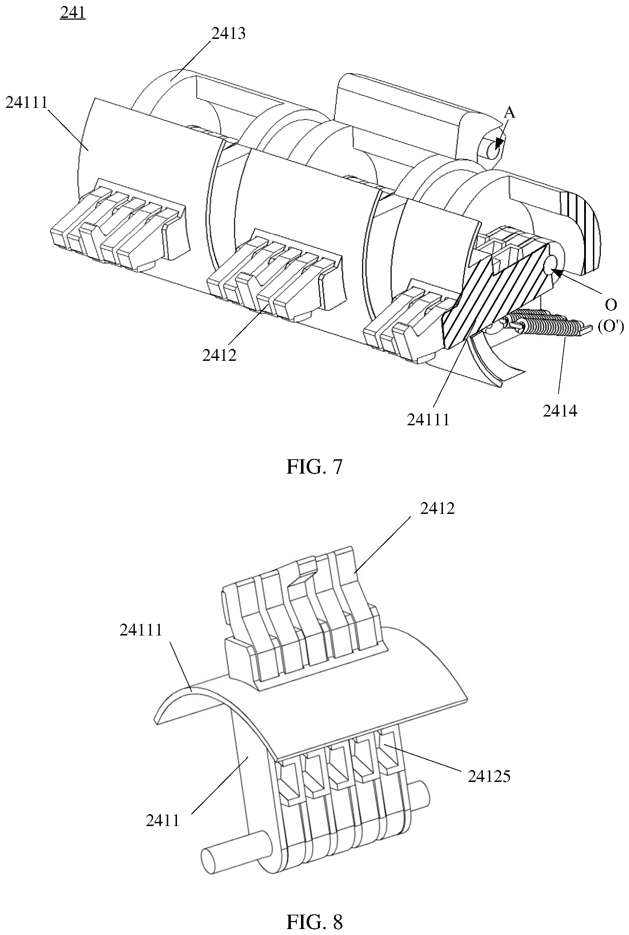

FIG. 5 is another diagram of a circuit breaker according to an embodiment of this application. FIG. 5 is another cross-sectional view of the circuit breaker in FIG. 3 in the direction of A-A. As shown in FIG. 5, when the moving contact component 241 is specifically disposed, a separator plate 212 is disposed in the outer shell 21, the separator plate 212 is located between the operating mechanism 23 and the arc-quenching chamber 25, and extends in the height h direction of the circuit breaker 20, and the separator plate 212 is provided with an opening. In the depth d direction of the circuit breaker 20, the gas-generating link rod 2411 is located on a side that is of the opening and that is close to the operating mechanism 23, and the gas-generating link rod 2411 may always cover the opening. FIG. 6 is a diagram of a moving contact component according to an embodiment of this application. FIG. 7 is another diagram of a moving contact component according to an embodiment of this application. FIG. 8 is a diagram of cooperation between a moving contact and a gas-generating link rod according to an embodiment of this application. As shown in FIG. 6, FIG. 7, and FIG. 8, the moving contact 2412 and the gas-generating link rod 2411 are relatively fixed. An end that is of the gas-generating link rod 2411 and that is close to the operating mechanism 23 is rotatably connected to the outer shell 21. An end that is of the gas-generating link rod 2411 and that is away from the operating mechanism 23 is provided with a baffle plate 24111. A surface of a side that is of the baffle plate 24111 and that is close to the arc-quenching chamber 25 covers the opening of the separator plate 212. When the operating mechanism 23 drives the moving contact 2412 to rotate, the baffle plate 24111 may always cover the opening to isolate the operating mechanism 23 from the arc-quenching layer. Therefore, when the moving contact 2412 and the fixed contact 2421 are separated, an end that is of the gas-generating link rod 2411 and that is close to the arc-quenching chamber 25 is eroded by an electric arc and then generates a gas blast, and the gas-generating link rod 2411 can keep generating the gas blast around the moving contact 2412 because the gas-generating link rod 2411 moves with the moving contact 2412. In this case, when the moving contact 2412 and the fixed contact 2421 are separated, the electric arc is continuously blown to the arc-quenching chamber 25 to extinguish the arc, thereby improving a capability of separating the moving contact from the fixed contact 2421, and protecting the operating mechanism 23 from electric arc erosion. In the foregoing embodiment, the arc-shaped baffle plate 24111 and the gas-generating link rod 2411 may be of an integrated structure, thereby improving structural strength of the gas-generating link rod 2411. Alternatively, the arc-shaped baffle plate 24111 and the gas-generating link rod 2411 may be fastened by bonding, welding, riveting, a threaded connection, or in another manner.

In the foregoing embodiment, the arc-shaped baffle plate 24111 may be an arc-shaped baffle plate, and a circle center of the arc-shaped baffle plate is located on a side that is of the arc-shaped baffle plate and that is close to the operating mechanism 23. In this implementation, a shape of the arc-shaped baffle plate can match a moving track of the moving contact 2412, so that the arc-shaped baffle plate can rotate with the moving contact 2412 and keep covering the opening. In another embodiment, the end that is of the gas-generating link rod 2411 and that is away from the operating mechanism 23 passes through the baffle plate 24111 and the opening, and extends toward the arc-quenching chamber 25. In this way, the gas-generating link rod 2411 can extend to a position at which the moving contact 2412 and the fixed contact 2421 are in contact, and directly generate a gas blast toward an electric arc generated between the moving contact 2412 and the fixed contact 2421, to quickly extinguish the electric arc.

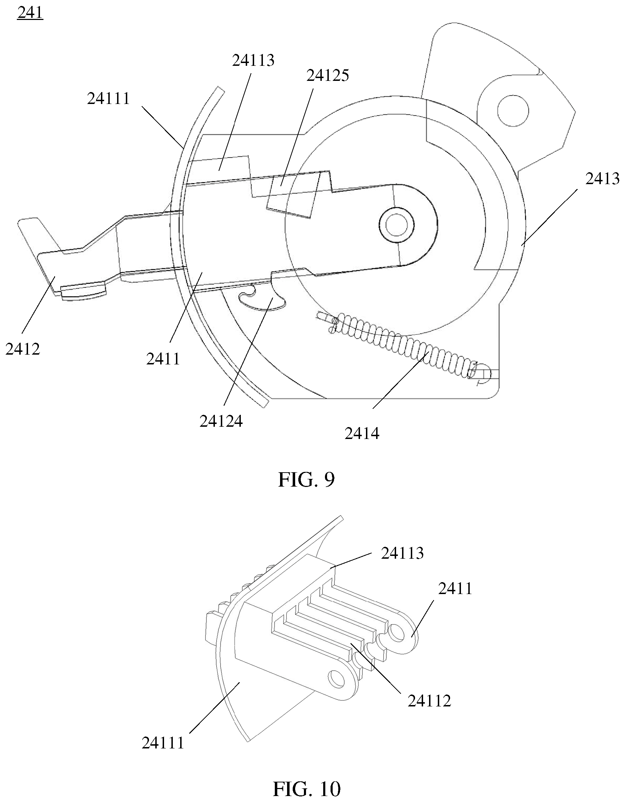

FIG. 9 is a cross-sectional view of the moving contact component in FIG. 7. As shown in FIG. 6, FIG. 7, and FIG. 9, the moving contact component 241 further includes a housing 2413, the housing 2413 is rotatably connected to the outer shell 21 (at a point O), and the operating mechanism 23 is connected to the housing 2413. An opening is provided on a side that is of the housing 2413 and that is close to the arc-quenching chamber 25, and the gas-generating link rod 2411 is disposed on the side that is of the housing 2413 and that is close to the arc-quenching chamber 25. The baffle plate 24111 is located on an outer side that is of the housing 2413 and that is close to the arc-quenching chamber 25, the gas-generating link rod 2411 extends into the housing 2413 through the opening, and the gas-generating link rod 2411 in the housing 2413 is connected to the outer shell 21 by a rotating shaft (a point O'). When the operating handle 22 is pushed in the height direction of the circuit breaker 20, the operating handle 22 can control the operating mechanism 23 to drive the housing 2413 to rotate. During the rotation of the housing 2413, a wall of the opening of the housing 2413 can push the gas-generating link rod 2411 to rotate around the point O', so that the moving contact 2412 is driven to rotate. In an embodiment of this application, a rotation center O of the housing 2413 and a rotation center O' of the gas-generating link rod 2411 may overlap or may not overlap. When the rotation centers overlap, the housing 2413 and the gas-generating link rod 2411 may be rotatably connected to the outer shell 21 by a same rotating shaft.

Still refer to FIG. 6 to FIG. 9. The moving contact component 241 may include the housing 2413, a plurality of groups of moving contacts 2412, and a plurality of gas-generating link rods 2411, where the plurality of groups of moving contacts 2412 and the plurality of gas-generating link rods 2411 are equal in quantity and are disposed in a one-to-one correspondence. Specifically, each group of moving contacts 2412 includes a plurality of moving contacts 2412, and the plurality of moving contacts 2412 are fastened sequentially to one gas-generating link rod 2411 in the width w direction of the circuit breaker 20. FIG. 10 is a diagram of a gas-generating link rod according to an embodiment of this application. As shown in FIG. 10, the gas-generating link rod 2411 is provided with a plurality of moving contact mounting grooves 24112 in a one-to-one correspondence with the plurality of moving contacts 2412, and each moving contact 2412 is accommodated in a corresponding moving contact mounting groove 24112. In each group of moving contacts 2412, the plurality of moving contacts 2412 may form a plurality of groups of parallel contact finger structures. The plurality of groups of parallel contact finger structures can increase a contact area between the moving contact 2412 and the fixed contact 2421, to reduce contact resistance, thereby improving a current-carrying capability between the moving contact 2412 and the fixed contact 2421. In addition, the plurality of groups of parallel contact finger structures can further reduce an electro-dynamic repulsion force when the moving contact 2412 and the fixed contact 2421 are separated, thereby improving a short-term tolerance index of a contact system. In the moving contact component 241 in this embodiment, the housing 2413, the plurality of groups of moving contacts 2412, and the plurality of gas-generating link rods 2411 may all be relatively fixed by using a same rotating shaft, and the plurality of groups of moving contacts 2412 and the plurality of gas-generating link rods 2411 are rotatably connected to the outer shell 21, thereby further simplifying a structure of the moving contact component 241 to facilitate mounting.

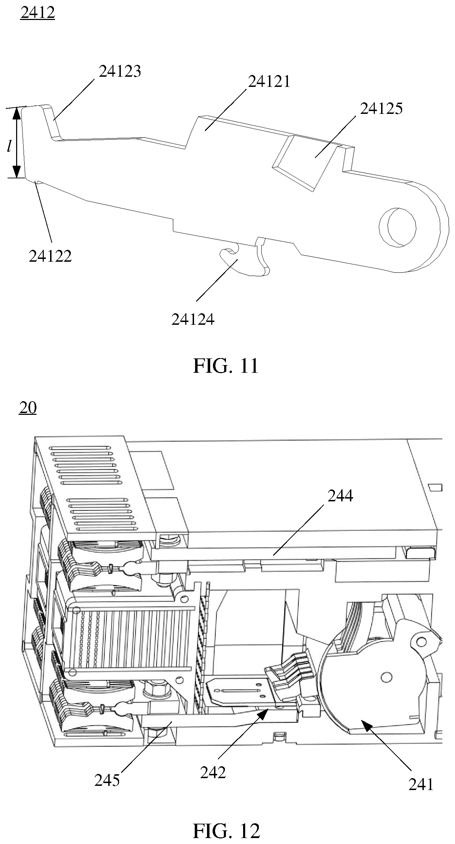

FIG. 11 is a diagram of a moving contact according to an embodiment of this application. As shown in FIG. 11, the moving contact 2412 includes a rotatable lever 24121 and a contact 24122, the rotatable lever 24121 may be fastened in the moving contact mounting groove 24112 and extends out of the moving contact mounting groove 24112 in a direction toward the arc-quenching chamber 25, and the contact 24122 is located at an end that is of the rotatable lever 24121 and that is close to the arc-quenching chamber 25. The rotatable lever 24121 is provided with a hook 24124, and the hook 24124 is located in the housing 2413. As shown in FIG. 6 and FIG. 7, the moving contact component 241 further includes a spring 2414 (ST) located in the housing 2413, where one end of the spring 2414 is connected to the housing 2413, and the other end is connected to the hook 24124. When the circuit breaker 20 is closed, the spring 2414 applies a pulling force to the moving contact 2412, so that the moving contact 2412 and the fixed contact 2421 are kept under pressure during closing. In the foregoing embodiment, when the moving contact component 241 includes a plurality of moving contacts 2412, the moving contact component 241 includes a plurality of springs 2414 disposed corresponding to the plurality of moving contacts 2412. One end of the spring 2414 is fastened to the corresponding moving contact 2412, and the other end is fastened to the housing 2413. In the foregoing embodiment, the rotatable lever 24121 is further provided with a notch 24125. The notch 24125 is provided to fasten a conducting wire 243, to electrically connect the moving contact 2412 to a copper busbar of the current-carrying component 24 through the conducting wire 243.

As shown in FIG. 11, the moving contact 2412 includes the contact 24122 to be in contact with or be separated from the fixed contact 2421, an arcing contact 24123 is provided on a side that is of the contact 24122 and that is away from the fixed contact 2421, and the arcing contact 24123 has an arc-guiding height l in a direction away from the fixed contact 2421. In the plurality of moving contacts 2412, an arc-guiding height l of an arcing contact 24123 of one or more moving contacts 2412 is greater than an arc-guiding height l of an arcing contact 24123 of another moving contact 2412. As shown in FIG. 6 and FIG. 7, in a specific embodiment, the moving contact component 241 includes three groups of parallel contact finger structures, and each group of parallel contact finger structures includes five moving contacts 2412 disposed side by side. An arc-guiding height l of one moving contact 2412 located in a middle position is greater than arc-guiding heights l of arcing contacts 24123 of the other four moving contacts 2412, and the arc-guiding heights l of the arcing contacts 24123 of the other four moving contacts 2412 are equal. When the moving contact 2412 and the fixed contact 2421 are separated, the moving contact 2412 with a maximum arc-guiding height l is closer to the fixed contact 2421, so that an electric arc generated by the moving contact component 241 mainly concentrates on the moving contact 2412 with the maximum arc-guiding height l, thereby reducing losses of the other moving contacts 2412.

As shown in FIG. 6, FIG. 9, and FIG. 10, a protrusion 24113 is provided on a side that is of the baffle plate 24111 and that is close to the operating mechanism 23, and the protrusion 24113 covers a part of the moving contact mounting groove 24112. When the moving contact 2412 is accommodated in the moving contact mounting groove 24112, the protrusion 24113 can limit the rotatable lever 24121 of the moving contact 2412 in the moving contact mounting groove 24112. In addition, a surface shape of the rotatable lever 24121 matches the baffle plate 24111 and the protrusion 24113. When the moving contact 2412 and the fixed contact 2421 are separated, the baffle plate 24111 and the gas-generating link rod 2411 are deformed due to high-temperature effect of an electric arc. In this case, the rotatable lever 24121 can support the baffle plate 24111 and the gas-generating link rod 2411.

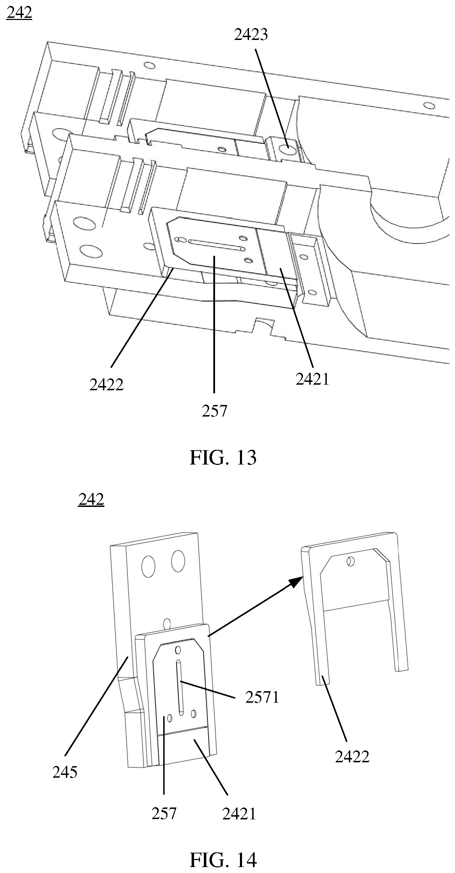

FIG. 12 is another diagram of a circuit breaker according to an embodiment of this application. FIG. 13 is a diagram of a fixed contact component according to an embodiment of this application. As shown in FIG. 12 and FIG. 13, the circuit breaker 20 includes a fixed contact component 242, and the fixed contact component 242 specifically includes a first gas-generating plate 2422 and the fixed contact 2421. The first gas-generating plate 2422 is disposed on the copper busbar of the current-carrying component 24, the fixed contact 2421 is disposed on a surface of a side that is of the first gas-generating plate 2422 and that is close to the arc-quenching chamber 25, and the first gas-generating plate 2422 is configured to form a gas blast toward the arc-quenching chamber 25. In the height h direction of the circuit breaker 20, the fixed contact 2421 is located between the first gas-generating plate 2422 and the arc-quenching chamber 25, so that the gas blast generated by the first gas-generating plate 2422 can directly blow an electric arc around the fixed contact 2421 to the arc-quenching chamber 25, that is, the electric arc passes through the arc-quenching chamber 25 from a lower right corner of the arc-quenching chamber 25 in FIG. 12 to an upper left corner of the arc-quenching chamber 25.

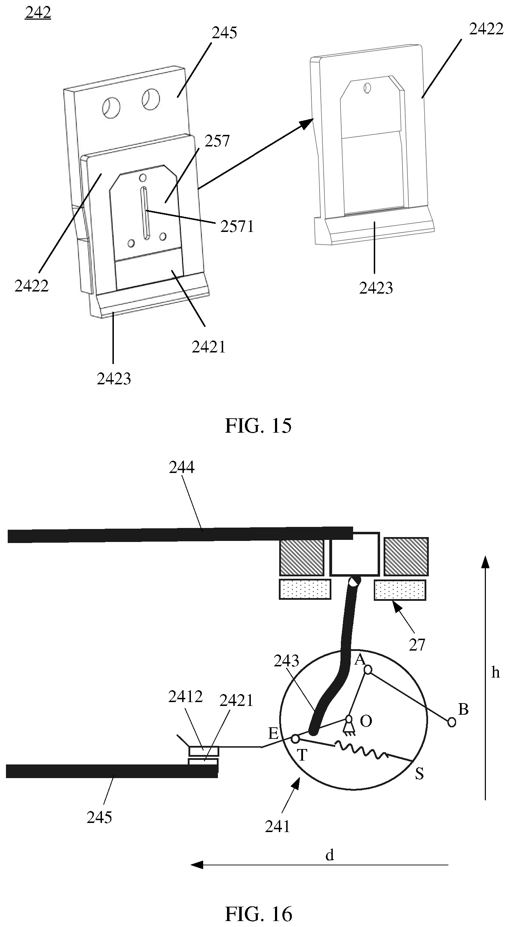

FIG. 14 is another diagram of a fixed contact component according to an embodiment of this application. FIG. 15 is another diagram of a fixed contact component according to an embodiment of this application. As shown in FIG. 14 and FIG. 15, the fixed contact component 242 further includes a second gas-generating plate 2423, where the second gas-generating plate 2423 is disposed on a surface of a side that is of the first gas-generating plate 2422 and that is close to the arc-quenching chamber 25, and the second gas-generating plate 2423 is located, in the depth d direction of the circuit breaker 20, on a side that is of the fixed contact 2421 and that is close to the operating mechanism 23. Therefore, the first gas-generating plate 2422 and the second gas-generating plate 2423 can form a plurality of gas blasts around the fixed contact 2421, increasing effect of blowing an arc by generated gas. In an embodiment, the first gas-generating plate 2422 and the second gas-generating plate 2423 may be of an integrated structure, thereby simplifying a making process and a mounting process of the fixed contact component 242. When the moving contact 2412 and the fixed contact 2421 are separated, gas blasts are generated from a lower part and a side surface of the fixed contact 2421, so that gas pressure around the fixed contact 2421 increases to blow an electric arc around the fixed contact 2421 to the arc-quenching chamber 25 to extinguish the arc.

As shown in FIG. 5, the current-carrying component 24 further includes the conducting wire 243, a first copper busbar 244, and a second copper busbar 245. The first copper busbar 244 and the second copper busbar 245 are opposite to each other in the height h direction of the circuit breaker 20, and the first copper busbar 244 and the second copper busbar 245 extend in the depth d direction of the circuit breaker 20. In an embodiment, the first copper busbar 244 and the second copper busbar 245 may be located on two sides of the arc-quenching chamber 25. In another embodiment, the first copper busbar 244 and the second copper busbar 245 may alternatively be located on a same side of the arc-quenching chamber 25. An end that is of the first copper busbar 244 and that is close to the operating mechanism 23 is electrically connected to the moving contact 2412 by the conducting wire 243, and an end that is of the first copper busbar 244 and that is away from the operating mechanism 23 is provided with a first connector 246. The fixed contact component 242 is disposed on the second copper busbar 245 and is electrically connected to the second copper busbar 245. An end that is of the second copper busbar 245 and that is away from the operating mechanism 23 is provided with a second connector 247. During specific configuration, the first copper busbar 244 and the second copper busbar 245 each may be fastened to the outer shell 21, where a surface of a side that is of the first copper busbar 244 and that is away from the arc-quenching chamber 25 is attached to an inner wall of the outer shell 21, and a surface of a side that is of the second copper busbar 245 and that is away from the arc-quenching chamber 25 is attached to an inner wall of the outer shell 21. When the moving contact component 241 includes a plurality of moving contacts 2412, the current-carrying component24 may include a plurality of conducting wires 243, and the plurality of conducting wires 243 and the plurality of moving contacts 2412 are connected in a one-to-one correspondence. In addition, the conducting wire 243 is connected to the rotatable lever 24121 of the moving contact 2412. Therefore, the conducting wire 243 is laid out in space among the moving contact component 241, the arc-quenching chamber 25, and the operating mechanism 23, improving space utilization. In addition, one end of the conducting wire 243 is electrically connected to the first copper busbar 244, and the other end may be connected to the notch 24125 of the rotatable lever 24121 of the moving contact 2412. When the operating mechanism 23 drives the moving contact component 241 to move, the conducting wire 243 does not interfere with movement of the operating mechanism 23, and energization of the operating mechanism 23 due to the conducting wire 243 accidentally touching the operating mechanism 23 is avoided.

As shown in FIG. 4 and FIG. 5, in a specific embodiment, the moving contact component 241 includes the housing 2413, the moving contact 2412, and the spring 2414 located in the housing 2413. The housing 2413 is rotatably connected to the outer shell 21 at a connection point A. Therefore, the rotation center of the housing 2413 to the connection point A between the housing 2413 and the outer shell 21 may be used as a fixed rod OA. The fixed contact 2421 is located on a side that is of the housing 2413 and that is away from the operating mechanism 23. The moving contact 2412 is located in the housing 2413 and extends out of the housing 2413 in a direction away from the operating mechanism 23. An end that is of the moving contact 2412 and that is located in the housing 2413 is rotatably connected to the outer shell 21, and may rotate around the point O' (which may overlap the point O or may not overlap the point O). The spring 2414 may extend into the housing 2413 and may rotate around the rotation center O' relative to the outer shell 21, and a contact point between the moving contact 2412 and the housing 2413 is a point E. One end of the spring 2414 is connected to the rotatable lever 24121 of the moving contact 2412, and the other end is connected to the housing 2413. The housing 2413 is configured to push, driven by the fixed rod OA of the operating mechanism 23, the moving contact 2412 to rotate. In addition, when the circuit breaker 20 is closed, the spring 2414 applies a pulling force to the moving contact 2412, so that the moving contact 2412 and the fixed contact 2421 are kept under pressure during closing.

Moreover, the arc-quenching chamber 25 further includes an arc-guiding plate 257. The arc-guiding plate 257 is disposed close to the fixed contact 2421, so that an electric arc around the fixed contact 2421 can be guided in time. In an embodiment, the arc-guiding plate 257 may be disposed on a surface of a side that is of the first gas-generating plate 2422 and that is close to the arc-quenching chamber 25, and the arc-guiding plate 257 is provided with a gas-generating hole 2571, so that a gas blast generated by the first gas-generating plate 2422 is blown to the arc-quenching chamber 25 through the gas-generating hole 2571.

In an embodiment, the circuit breaker 20 further includes an arc-extinguishing module 26, and the arc-extinguishing module 26 is configured to purify a gas blown from the arc-quenching chamber 25. The arc-extinguishing module 26 is located, in the depth d direction of the circuit breaker 20, on a side that is of the arc-quenching chamber 25 and that is away from the operating mechanism 23, that is, the arc-extinguishing module 26 is located on a fifth layer (an arc-extinguishing layer). An arc-spraying vent 28 is provided between the arc-quenching chamber 25 and the arc-extinguishing module, the arc-spraying vent 28 is provided to communicate the arc-quenching chamber 25 and the arc-extinguishing module 26, and the arc-spraying vent 28 is provided close to a side that is of the arc-quenching chamber 25 and that is away from the fixed contact 2421 in the height h direction. Therefore, when the baffle plate 2413 isolates the operating mechanism 23 from the arc-quenching chamber 25, the arc-spraying vent becomes the only outlet of the arc-quenching chamber 25. When the moving contact 2412 and the fixed contact 2421 are separated, the gas-generating link rod 2411 can form a gas blast toward the arc-spraying vent 28. The electric power device 10 further includes a circuit board located in the cabinet 11, the circuit board and the plurality of circuit breakers 20 are disposed sequentially in the depth D direction of the cabinet 11, and the circuit board is disposed close to the arc-extinguishing module 26. The arc-extinguishing module 26 can adsorb electrical free ions jetting from the arc-quenching chamber 25, so that the circuit breaker 20 can implement completely no arc jetting through a gas jetting from the arc-extinguishing module 26, avoiding an adverse impact on the circuit board of the electric power device 10.

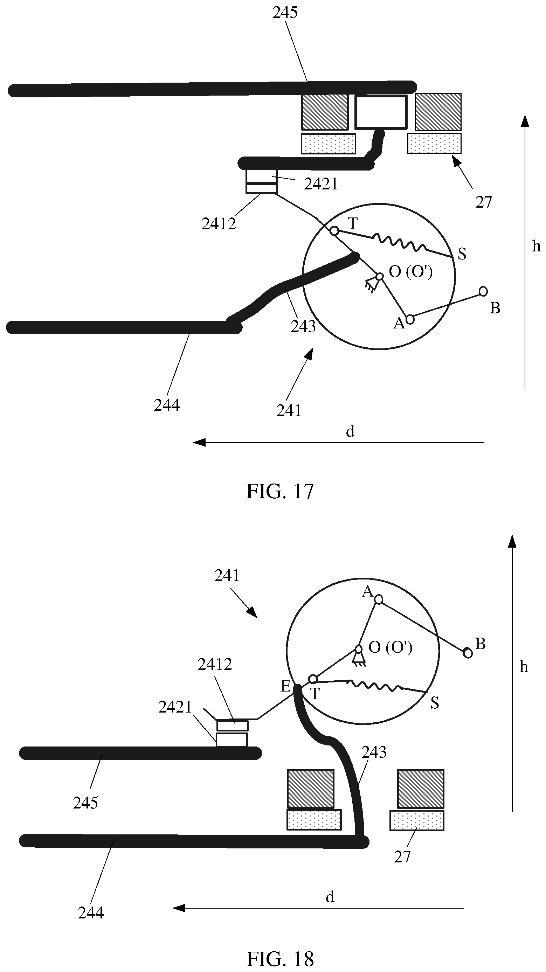

FIG. 16 is a diagram of a part of a circuit breaker according to an embodiment of this application. As shown in FIG. 16, the circuit breaker 20 further includes a tripping control component 27, and the tripping control component 27 can implement free tripping, opening, and closing of the circuit breaker 20. The tripping control component 27 and the operating mechanism 23 are in a transmission connection. The tripping control component 27 is configured to control, when a fault current is detected, the operating mechanism 23 to drive the moving contact component 241 to move, for the moving contact 2412 and the fixed contact 2421 to be separated. FIG. 17 is a diagram of another part of a circuit breaker according to an embodiment of this application. As shown in FIG. 16 and FIG. 17, in the height direction of the circuit breaker 20, the tripping control component 27 and the conducting wire 243 are disposed on a same side of the moving contact component 241. FIG. 18 is a diagram of another part of a circuit breaker according to an embodiment of this application. As shown in FIG. 18, in the height direction of the circuit breaker 20, the tripping control component 27 and the conducting wire 243 are respectively disposed on two sides of the moving contact component 241.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric power device, comprising a cabinet, and a plurality of circuit breakers and a plurality of power modules that are located in the cabinet, wherein the plurality of circuit breakers are disposed sequentially in the cabinet in a width direction of the cabinet, a height direction of the circuit breaker is the same as the width direction of the cabinet, a width direction of the circuit breaker is the same as a height direction of the cabinet, and a depth direction of the circuit breaker is the same as a depth direction of the cabinet;
the circuit breaker comprises an outer shell, an operating handle, an operating mechanism, a current-carrying component, and an arc-quenching chamber; the operating handle is connected to the operating mechanism; the current-carrying component comprises a moving contact component and a fixed contact; a part that is of the operating handle and that is at least close to the operating mechanism, the operating mechanism, the moving contact component, and the arc-quenching chamber are disposed sequentially in the outer shell in the depth direction of the circuit breaker;
a separator plate is disposed in the outer shell, the separator plate is located between the operating mechanism and the arc-quenching chamber, and extends in the height direction of the circuit breaker, the separator plate is configured to separate the operating mechanism from the arc-quenching chamber, and the separator plate is provided with an opening;
the moving contact component is rotatable relative to the outer shell; the moving contact component comprises a moving contact and a gas-generating link rod, and the moving contact and the gas-generating link rod are relatively fixed; the gas-generating link rod is configured to form a gas blast toward the arc-quenching chamber; an end that is of the gas-generating link rod and that is close to the operating mechanism is rotatably connected to the outer shell, an end that is of the gas-generating link rod and that is away from the operating mechanism is provided with a baffle plate, and the baffle plate is located on a side that is of the opening and that is close to the operating mechanism;
the fixed contact is located, in the depth direction of the circuit breaker, on a side that is of the moving contact component and that is away from the operating mechanism;
the operating mechanism is connected to the moving contact component, and the operating handle is configured to control the operating mechanism to drive the gas-generating link rod of the moving contact component to rotate relative to the outer shell, for the moving contact and the fixed contact to be in contact or be separated; the baffle plate is configured to always cover the opening in a process in which the operating mechanism drives the gas-generating link rod to rotate relative to the outer shell; and
the arc-quenching chamber is configured to extinguish an electric arc generated when the moving contact and the fixed contact are separated.

2. The electric power device according to claim 1, wherein the baffle plate is an arc-shaped baffle plate, and a circle center of the arc-shaped baffle plate is located on a side that is of the arc-shaped baffle plate and that is close to the operating mechanism.

3. The electric power device according to claim 1 or 2, wherein the end that is of the gas-generating link rod and that is away from the operating mechanism passes through the baffle plate and the opening, and extends toward the arc-quenching chamber.

4. The electric power device according to any one of claims 1 to 3, wherein the moving contact component further comprises a housing, the operating mechanism is fastened to the housing, and the housing is rotatably connected to the outer shell;
the end that is of the gas-generating link rod and that is close to the operating mechanism is located in the housing, and the other end extends out of the housing; the baffle plate is located on a surface of a side that is of the housing and that is close to the arc-quenching chamber; and
when the operating mechanism drives the housing to rotate relative to the outer shell, the housing pushes the gas-generating link rod to rotate relative to the outer shell, to drive the moving contact to rotate.

5. The electric power device according to claim 4, wherein a rotation center of the housing relative to the outer shell overlaps a rotation center of the gas-generating link rod relative to the outer shell.

6. The electric power device according to claim 4 or 5, wherein the moving contact comprises a rotatable lever and a contact, the rotatable lever and the gas-generating link rod are relatively fixed, and the contact is located at an end that is of the rotatable lever and that is close to the arc-quenching chamber; and
the moving contact component further comprises a spring located in the housing, one end of the spring is fastened to the housing, the other end is fastened to the rotatable lever, and the spring is configured to apply a pulling force to the moving contact when the circuit breaker is closed, to keep the moving contact and the fixed contact in contact.

7. The electric power device according to claim 6, wherein an end that is of the contact and that is close to the fixed contact is configured to be in contact with or be separated from the fixed contact, an end that is of the contact and that is away from the fixed contact is provided with an arcing contact, and the arcing contact has an arc-guiding height in a direction away from the fixed contact, and is configured to guide, when the moving contact and the fixed contact are separated, the electric arc to concentrate on the arcing contact.

8. The electric power device according to claim 7, wherein the moving contact component comprises a plurality of moving contacts, and the plurality of moving contacts are disposed sequentially in the width direction of the circuit breaker and are relatively fixed with the gas-generating link rod; and
in the plurality of moving contacts, an arc-guiding height of an arcing contact of a moving contact is greater than an arc-guiding height of an arcing contact of another moving contact.

9. The electric power device according to any one of claims 1 to 8, wherein the moving contact and the gas-generating link rod are rotatably connected to the outer shell by a rotating shaft.

10. The electric power device according to any one of claims 1 to 9, wherein the current-carrying component further comprises a conducting wire, and two copper busbars opposite to each other in the height direction of the circuit breaker, and the two copper busbars extend separately in the depth direction of the circuit breaker; and
one end of the conducting wire is connected to one of the two copper busbars, the other end is connected to the moving contact, and in the depth direction of the circuit breaker, the conducting wire is located on a side that is of a rotation center of the moving contact relative to the outer shell and that is close to the arc-quenching chamber; and the other of the two copper busbars is connected to the fixed contact.

11. The electric power device according to claim 10, wherein the circuit breaker further comprises a tripping control component; in the height direction of the circuit breaker, the tripping control component and the conducting wire are disposed on a same side of the moving contact component, or the tripping control component and the conducting wire are respectively disposed on two sides of the moving contact component; the tripping control component and the operating mechanism are in a transmission connection; and the tripping control component is configured to control, when a fault current is detected, the operating mechanism to drive the moving contact component to move, for the moving contact and the fixed contact to be separated.

12. The electric power device according to any one of claims 1 to 11, wherein the electric power device further comprises an arc-extinguishing module, the arc-extinguishing module is located, in the depth direction of the circuit breaker, on a side that is of the arc-quenching chamber and that is away from the operating mechanism, and the arc-extinguishing module is configured to purify a gas blown from the arc-quenching chamber; and
the electric power device further comprises a circuit board located in the cabinet, the circuit board and the plurality of circuit breakers are disposed sequentially in the depth direction of the cabinet, and the circuit board is disposed close to the arc-extinguishing module.

13. The electric power device according to claim 12, wherein an arc-spraying vent is provided between the arc-extinguishing module and the arc-quenching chamber, the arc-spraying vent communicates the arc-quenching chamber and the arc-extinguishing module, and the arc-spraying vent is provided close to a side that is of the arc-quenching chamber and that is away from the fixed contact in the height direction of the circuit breaker; and the gas-generating link rod is configured to form a gas blast toward the arc-spraying vent.

14. A circuit breaker, wherein the circuit breaker comprises an outer shell, an operating handle, an operating mechanism, a current-carrying component, and an arc-quenching chamber, wherein
the operating handle is connected to the operating mechanism; the current-carrying component comprises a moving contact component and a fixed contact; a part that is of the operating handle and that is at least close to the operating mechanism, the operating mechanism, the moving contact component, and the arc-quenching chamber are disposed sequentially in the outer shell in a depth direction of the circuit breaker;
a separator plate is disposed in the outer shell, the separator plate is located between the operating mechanism and the arc-quenching chamber, and extends in a height direction of the circuit breaker, the separator plate is configured to separate the operating mechanism from the arc-quenching chamber, and the separator plate is provided with an opening;
the moving contact component is rotatable relative to the outer shell; the moving contact component comprises a moving contact and a gas-generating link rod, and the moving contact and the gas-generating link rod are relatively fixed; the gas-generating link rod is configured to form a gas blast toward the arc-quenching chamber; an end that is of the link rod and that is close to the operating mechanism is rotatably connected to the outer shell, and an end that is of the gas-generating link rod and that is away from the operating mechanism is provided with a baffle plate;
the fixed contact is located, in the depth direction of the circuit breaker, on a side that is of the moving contact component and that is away from the operating mechanism;
the operating mechanism is connected to the moving contact component, and the operating handle is configured to control the operating mechanism to drive the gas-generating link rod of the moving contact component to rotate relative to the outer shell, for the moving contact and the fixed contact to be in contact or be separated; the baffle plate is located on a side that is of the opening and that is close to the operating mechanism, and the baffle plate is configured to always cover the opening in a process in which the operating mechanism drives the gas-generating link rod to rotate relative to the outer shell; and
the arc-quenching chamber is configured to extinguish an electric arc generated when the moving contact and the fixed contact are separated.
